# EUROPÄISCHE PATENTSCHRIFT

(11) **EP 0 400 327 B1**
(45) Veröffentlichungstag und Bekanntmachung des Hinweises auf die Patenterteilung: **20.01.1993**
(21) Anmeldenummer: 90107963.2
(22) Anmeldetag: 26.04.1990
(51) Int. Cl.: A01D 41/00, A01D 41/12

(54) **Mähdrescher**
Combine harvester
Moissonneuse-batteuse

(30) Priorität: 31.05.1989 DE 3917605
(43) Veröffentlichungstag der Anmeldung: 05.12.1990
(73) Patentinhaber: CLAAS OHG, D-33426 Harsewinkel (DE)
(72) Erfinder: Harig, Horst, Dipl.-Ing., D-4834 Harsewinkel 2 (DE); Kersting, Hermann, Dipl.-Ing., D-4740 Oelde/Lette (DE)

(56) Entgegenhaltungen:
- EP-A- 0 250 654
- DD-A- 89 504
- DE-A- 3 122 920
- DE-B- 1 130 644

## Beschreibung

Die Erfindung betrifft einen Mähdrescher bestehend aus einem Fahrgestell, einem Gehäuse, einem im Tangentialfluß arbeitenden, aus Dreschtrommel und -korb gebildeten Dreschorgan, weiter bestehend aus an das Dreschorgan anschließenden Strohschüttlern mit darunter angeordnetem Rücklaufboden und einer Siebeinrichtung, wobei den Strohschüttlern eine im Mähdreschergehäuse gelagerte, an sich bekannte, im Axialfluß arbeitende und aus Rotor und Gehäuse bestehende Dresch- und Trenneinrichtung nachgeordnet ist. Ein derartiger Mähdrescher ist aus DE-A-3122920 bekannt.

Aufgabe der vorliegenden Erfindung ist es, die Produktion, insbes. die Montage eines Mähdreschers der in Rede stehenden Art flexibel gestalten zu können, um je nach Kundenwunsch kurzfristig auch Mähdrescher ausliefern zu können, bei denen auf die nachgeordnete, im Axialfluß arbeitende Dresch- und Trenneinheit verzichtet werden soll. Im Umkehrschluß lautet die Aufgabe aber auch, einen Weg zu schaffen, auf dem herkömmliche Schüttler-Mähdrescher ohne großen Montageaufwand mit der nachgeordneten Dresch- und Trenneinheit nachgerüstet werden können.

Dieses Problem wird erfindungsgemäß dadurch gelöst, daß die im Axialfluß arbeitende und aus Rotor und Gehäuse bestehende Dresch- und Trenneinrichtung als separate Baueinheit ausgebildet und gegen eine andere Baueinheit austauschbar im Mähdreschergehäuse gelagert ist, wobei das Mähdreschergehäuse am beiden Seiten einen zumindest nach oben offenen Verstärkungsrahmen zur Aufnahme der separaten Baueinheit aufweist. Weitere erfindungsgemäße Ausbildungen sind in den Unteransprüchen näher definiert.

Im folgenden soll die Erfindung anhand eines Ausführungsbeispiels und mehrerer dieses schematisch darstellen der Figuren näher erläutert werden. Dabei zeigt:
Fig. 1 einen erfindungsgemäß gestalteten Mähdrescher in schematischer Teilseitenansicht,
Fig. 2 eine bereichsweise Draufsicht in Schnittdarstellung und der Linie II-II der Fig. 1,
Fig. 3 einen Teil der in Fig. 1 dargestellten Baueinheit.

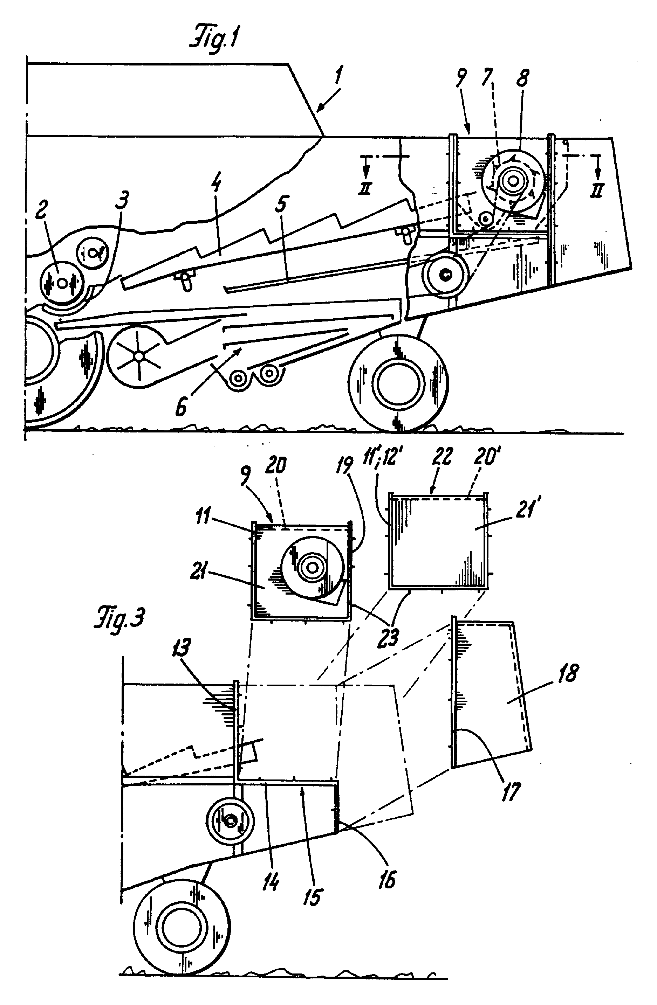

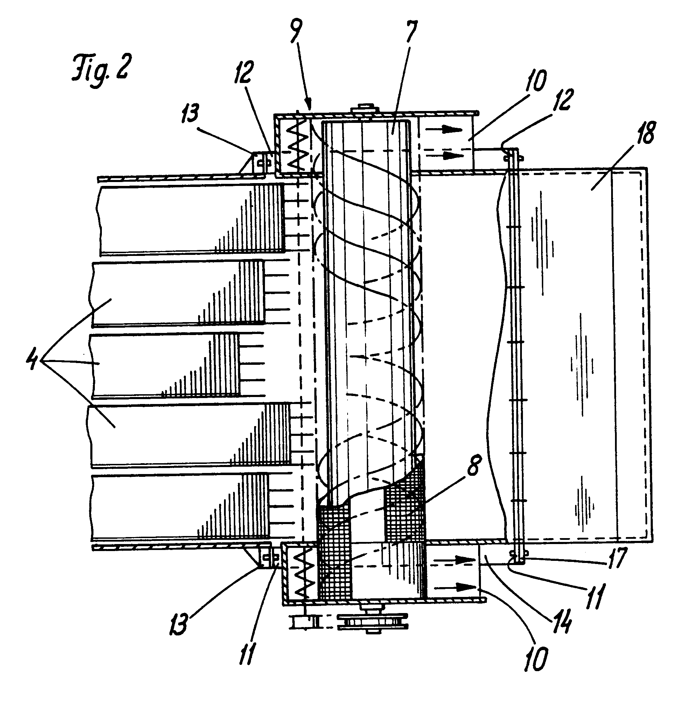

Mit 1 ist das Gehäuse eines Mähdreschers bezeichnet, in dem in bekannter Weise ein im Tangentialfluß arbeitendes, aus Dreschtrommel 2 und Dreschkorb 3 gebildetes Dreschorgan, anschließende Strohschüttler 4, ein Rücklaufboden 5 sowie eine Siebeinrichtung 6 angeordnet sind. Dabei ist den Schüttlern 4 eine an sich bekannte aus Rotor 7 und Gehäuse 8 bestehende als separate Baueinheit 9 ausgebildete Trenneinrichtung nachgeordnet. Diese Baueinheit 9 ragt zu beiden Seiten um den selben Betrag aus dem Mähdreschergehäuse hervor, wobei das Gehäuse 8 der Baueinheit 9 in den aus dem Mähdreschergehäuse vorragenden Bereichen Gutauslaßöffnungen 10 aufweist. Zwecks leichter Montage sind mit dem Gehäuse 8 der Baueinheit 9 zwei nach oben offene U-förmige mit Abstand voneinander vorgesehene Tragrahmen 11 und 12 verschweißt. Diese Tragrahmen 11 und 12 sind im in den Fig. 1 und 2 dargestellten Beispiel mit den beiden vorderen senkrechten Profilen 13 und den beiden horizontal verlaufenden Profilen 14 zweier Verstärkungsrahmen 15 verschraubt, die beidseits mit dem Mähdreschergehäuse 1 fest verbunden sind. An die beiden horizontal verlaufenden Profile 14 schließen sich zwei nach unten verlaufenden senkrechte Profile 16 an. Mit diesen Profilen 16 ist ein Teil eines Verstärkungsrahmens 17 verschraubt, der die mit dem Mähdrescher zu verbindende Anschlußseite der Ausfallhaube 18 zumindest bereichsweise umfaßt. Der obere Teil des Verstärkungsrahmens 17 ist mit den hinteren Profilen 19 der Rahmen 11 und 12 fest verschraubt. Ebenso wie die Baueinheit 9 aus Tragrahmen 11 und 12 sowie einer oberen Abdeckung 20 und seitlichen Abdeckungen 21 besteht, besteht eine weitere Baueinheit 22 aus eben diesen Elementen 11′, 12′, 20′ und 21′, wobei beide Baueinheiten 9 und 22 hinsichtlich ihrer Befestigungspunkte 23 identisch aufgebaut sind. Auf diese Weise kann je nach Bedarf eine Baueinheit 9 gegen die andere 22 leicht ausgetauscht werden.

### Bezugszeichenverzeichnis:

- 1: - Mähdreschergehäuse
- 2: - Dreschtrommel
- 3: - Dreschkorb
- 4: - Schüttler
- 5: - Rücklaufboden
- 6: - Sieb
- 7: - Rotor
- 8: - Gehäuse
- 9: - Baueinheit
- 10: - Gutauslauföffnungen
- 11′,12,12′,11: Tragrahmen
- 13: - senkrechte Profile
- 14: - horizontale Profile
- 15: - Verstärkungsrahmen
- 16: - untere senkrechte Profile
- 17: - Verstärkungsrahmen
- 18: - Ausfallhaube
- 19: - hintere Profile
- 20: - obere Abdeckung
- 21,21′: seitliche Abdeckung
- 22: - zweite Baueinheit
- 23: - Befestigungspunkte

## Patentansprüche

1. Mähdrescher, bestehend aus einem Fahrgestell, einem Gehäuse, einem im Tangentialfluß arbeitenden, aus Dreschtrommel und -Korb gebildeten Dreschorgan, weiter bestehend aus an das Dreschorgan anschließenden Strohschüttlern mit darunter angeordnetem Rücklaufboden und einer Siebeinrichtung, wobei den Strohschüttlern eine im Mähdreschergehäuse gelagerte, ansich bekannte im Axialfluß arbeitende und aus Rotor und Gehäuse bestehende Dresch- und Trenneinheit nachgeordnet ist,
**dadurch gekennzeichnet**,
daß die im Axialfluß arbeitende und aus Rotor und Gehäuse bestehende Dresch- und Trenneinrichtung als separate Baueinheit (9) ausgebildet und gegen eine andere Baueinheit (22) austauschbar im Mähdreschergehäuse gelagert ist, wobei das Mähdreschergehäuse (1) an beiden Seiten einen zumindest nach oben offenen Verstärkungsrahmen (15) zur Aufnahme der separaten Baueinheit (9) aufweist.

2. Mähdrescher nach den Ansprüchen 1,
**dadurch gekennzeichnet**,
daß die separate Baueinheit (9) außer Rotor und Gehäuse und deren Funktionselemente zwei äußere Tragrahmen (11) und (12) sowie zwei seitliche und eine obere Abdeckung (21 bzw. 20) aufweist.

3. Mähdrescher nach den Ansprüchen 1 bis 2,
**dadurch gekennzeichnet**,
daß die Tragrahmen (11) und (12) der separaten Baueinheit (9) mit den Verstärkungsrahmen (15) verschraubbar sind.

4. Mähdrescher nach den Ansprüchen 1 bis 3,
**dadurch gekennzeichnet**,
daß die separate Baueinheit (9) und die gegen diese austauschbare andere Baueinheit (22) zumindest hinsichtlich der äußeren Tragrahmen (11) und (12) und ihrer Befestigungspunkte (23 und 23′) identisch ausgebildet sind.

5. Mähdrescher nach den Ansprüchen 1 bis 4,
**dadurch gekennzeichnet**,
daß die Verstärkungsrahmen (15) des Mähdreschergehäuses (1) die Form eines rechten Winkels haben und nach oben sowie nach hinten offen sind.

6. Mähdrescher nach den Ansprüchen 1 bis 4,
**dadurch gekennzeichnet**,
daß jeder Verstärkungsrahmen (15) des Mähdreschergehäuses (1) zwei senkrechte verlaufende Profilpaare (13 und 14) und ein diese einander verbindendes horizontal verlaufendes Profilpaar (14) ausweisen, wobei die beiden senkrecht verlaufenden Profilpaare (13 und 16) sowohl seitlich wie auch in der Höhe gegeneinander versetzt sind.

7. Mähdrescher nach den Ansprüchen 1 bis 6,
**dadurch gekennzeichnet**,
daß die Mähdrescher-Auswurfhaube (18) ebenfalls einen Verstärkungsrahmen (17) aufweist, der mit den hinteren Profilen (23) der Tragrahmen der Baueinheiten (9) sowie mit den hinteren senkrecht verlaufenden Profilen (16) des Verstärkungsrahmens (15) des Mähdreschergehäuses (1) verschraubbar ist.

## Claims

1. A combine harvester comprising a chassis, a housing, a threshing unit which operates in the tangential flow mode and which is formed from a threshing drum and a concave, further comprising straw walkers adjoining the threshing unit with a return bottom arranged therebeneath, and a sieve device, wherein arranged downstream of the straw walkers is a per se known threshing and separating unit which is mounted in the combine harvester housing and which operates in the axial flow mode and which comprises a rotor and a housing, characterised in that the threshing and separating means which operates in the axial flow mode and which comprises a rotor and a housing is in the form of a separate structural unit (9) and is mounted in the combine harvester housing interchangeably for another structural unit (22), wherein the combine harvester housing (1) has at both sides an at least upwardly open reinforcing frame (15) for receiving the separate structural unit (9).

2. A combine harvester according to claim 1 characterised in that the separate structural unit (9), besides the rotor and the housing and the functional elements thereof, has two outer support frames (11) and (12) and two lateral and an upper cover means (21 and 20 respectively).

3. A combine harvester according to claims 1 and 2 characterised in that the support frames (11) and (12) of the separate structural unit (9) can be screwed to the reinforcing frames (15).

4. A carbine harvester according to claims 1 to 3 characterised in that the separate structural unit (9) and the other structural unit (22) which is interchangeable therefor are identical at least in regard to the outer support frames (11) and (12) and their fixing points (23 and 23′) .

5. A combine harvester according to claims 1 to 4 characterised in that the reinforcing frames (15) of the combine harvester housing (1) have the shape of a right angle and are open upwardly and rearwardly.

6. A combine harvester according to claims 1 to 4 characterised in that each reinforcing frame (15) of the combine harvester housing (1) has two perpendicularly extending pairs of profile members (13 and 16) and a horizontally extending pair of profile members (14) connecting same, wherein the two perpendicularly extending pairs of profile members (13 and 16) are displaced relative to each other both laterally and also in respect of height.

7. A combine harvester according to claims 1 to 6 characterised in that the combine harvester delivery hood (18) also has a reinforcing frame (17) which can be screwed to the rear profile members (23) of the support frames of the structural units (9) and to the rear perpendicularly extending profile members (16) of the reinforcing frame (15) of the combine harvester housing (1).

## Revendications

1. Moissonneuse-batteuse constituée par un train de roulement, un carter, un organe de battage fonctionnant en flux tangentiel et constitué par un cylindre-batteur et un contre-batteur, et comprenant en outre des secoueurs de paille raccordés à l'organe de battage avec une plaque de retour et un dispositif de tamisage disposés au-dessous, tandis qu'un dispositif de battage et de séparation, travaillant de façon connue en soi en flux axial et constitué par un rotor et un carter, est monté dans le carter de la moissonneuse-batteuse à la suite des secoueurs de paille, caractérisée en ce que le dispositif de battage et de séparation travaillant en flux axial et constitué par un rotor et un carter est réalisé sous forme d'un ensemble séparé (9) et est monté dans le carter de la moissonneuse-batteuse de façon à pouvoir être remplacé par un autre ensemble (22), le carter (1) de la moissonneuse-batteuse comprenant sur ses deux côtés un châssis de renforcement (22) au moins ouvert vers le haut pour recevoir l'ensemble séparé.

2. Moissonneuse-batteuse selon la revendication 1, caractérisée en ce que l'ensemble séparé (9) comprend en dehors du rotor, du carter et de ses éléments fonctionnels,deux châssis porteurs externes (11 et 12) ainsi que deux éléments de recouvrement latéraux et un élément de recouvrement supérieur (21 ou 20).

3. Moissonneuse-batteuse selon les revendications 1 et 2, caractérisée en ce que les châssis porteurs (11 et 12) de l'ensemble séparé (9) peuvent être boulonnés sur les châssis de renforcement (15).

4. Moissonneuse-batteuse selon les revendications 1 à 3, caractérisée en ce que l'ensemble séparé (9) et l'autre ensemble (22) qui peut remplacer ce dernier sont de constitution identique au moins en ce qui concerne les châssis porteurs externes (11 et 12) et leurs points de fixation (23 et 23′).

5. Moissonneuse-batteuse selon les revendications 1 à 4, caractérisée en ce que les châssis de renforcement (15) du carter (1) de la moissonneuse-batteuse ont la forme d'un angle droit et sont ouverts vers le haut ainsi que vers l'arrière.

6. Moissonneuse-batteuse selon les revendications 1 à 4, caractérisée en ce que chaque châssis de renforcement (15) du carter (1) de la moissonneuse-batteuse comprend deux paires de profilés verticaux (13 et 14) et une paire de profilés horizontaux (14) reliant ces derniers, les deux paires de profilés verticaux (13 et 16) étant décalés l'un par rapport à l'autre aussi bien latéralement qu'en hauteur.

7. Moissonneuse-batteuse selon les revendications 1 à 6, caractérisée en ce que le capot d'éjection (18) de la moissonneuse-batteuse comprend également un châssis de renforcement (17) qui peut être boulonné avec les profilés arrière (23) des châssis porteurs de l'ensemble (9) ainsi qu'avec les profilés verticaux arrière (16) du châssis de renforcement (15) du carter (1) de la moissonneuse-batteuse.
